# EUROPEAN PATENT APPLICATION

(11) **EP 3 689 533 A1**
(43) Date of publication of application: **05.08.2020**
(21) Application number: 19380002.6
(22) Date of filing: 04.02.2019
(51) Int. Cl.: B23K 37/08, B23K 31/12, B21C 37/08, B21C 37/12, B23D 79/02

(54) **APPARATUS AND METHOD FOR AUTOMATION OF WELD SEAMS MACHINING**

(71) Applicant: Siemens Gamesa Renewable Energy Innovation & Technology, S.L., 31621 Sarriguren Navarra (ES)
(72) Inventor: Unanua Hermoso de Mendoza, Pablo, 31621 Sarriguren (ES); Gutierrez Fernandez, Jose Fermin, 31621 Sarriguren (ES); Moreno Catalan, Jesus, 31621 Sarriguren (ES)
(74) Representative: Aspacher, Karl-Georg

(57) **Abstract**

An apparatus (1) for automation of weld seams (6) machining of a wind turbine tower (7) is described. Comprises an automated arm (2); a machining tool (3) fixed to the automated arm (2); a compensator system (4) fixed to the machining tool (3) or being part of the automated arm (2); a joint visor (5) that identifies and locates the weld seam (6); and a control unit to coordinate the movement of the machining tool (3) with the compensator system (4) and the joint visor (5). It is also provided a method of performing a welded circular seam (6) machining in a wind turbine tower (7) with said apparatus (1).

## Description

### OBJECT OF THE INVENTION

The present invention discloses an automatic apparatus for weld seams machining in wind turbine towers. Specifically the apparatus is designed to perform the machining after the welding of the circumferential seams of the tower.

### BACKGROUND OF THE INVENTION

Fatigue resistance of a wind turbine tower is limited by the welded zones. One of this welded zones are the circular seams between shells and between shells and flanges.

From the state of the art some methods for performing welded connections. For example, it is known document EP2047941 which discloses a method of strengthening a welded connection comprising at least one weld seam and/or of increasing of tolerance of a welded connection in relation to fatigue load. The geometry of at least one weld seam and of at least one section of at least one component, which at least one section adjoins to the at least one weld seam, is specifically modified by removing welding material from the at least one weld seam and by removing material of the at least one section of the at least one component, which material adjoins to the at least one weld seam.

In document EP2775141. it is disclosed a tower-internal-apparatus bracket structure with a welded structure that can ensure a fatigue strength classification equal to or greater than that of butt welding or that requires no welding.

Also document JP2004034141 provides a method of producing a joint having a satisfactory surface condition. Two pieces of joining members having mutually different thicknesses are abutted on each other. A joining tool for friction stirring joining having a rotatable probe is used, and the rotating probe of the joining tool is inserted into the abutting part of both joining members from the surface side. In this state, the probe is moved along the abutting part, so that the abutting part is subjected to friction stirring joining. Thereafter, the surface of the jointed part is cut by using a cutting tool.

Generally, the circumferential shells of wind turbine towers have a fatigue resistance that can be defined as detail category of DC80 according to EN1993-1-9. It is possible to increase this detail category to DC90, by implementing some technical improvements on the workshops. This allows increasing the fatigue resistance of the tower and therefore reduces its weight.

The main geometrical characteristics of the circumferential welds are described herein and associated to a specific Detail Category (DC):
- DC112: All welds have to be ground flush to plate surface; weld run-on and run-off to be used and subsequently removed, plate edges to be ground flush in direction of the stress; welded from both sides.
- DC90: The height of the weld convexity has to be less than 10% of the weld width, with smooth transition to the plate surface; weld run-on and run-off to be used and subsequently removed, plate edges to be ground flush in direction of the stress; welded from both sides.
- DC80: The height of the weld convexity has to be not greater than 20% of the weld width, with smooth transition to the plate surface; weld run-on and run-off to be used and subsequently removed, plate edges to be ground flush in direction of the stress; welded from both sides.

However, currently almost no tower welds of wind turbine towers are designed to DC112, and therefore with the requirement of being machined. This is because DC112 means an extra cost for the complete tower as the extra work is significantly more expensive than the savings on the tower.

Tower circumferential welds nowadays are designed with lower fatigue resistance, DC80 and DC90 (of weld geometrical characteristics) as it is the most efficient cost-effective solution. For a given load where fatigue is the design driver, DC90 (weld geometrical characteristics) is the most efficient solution. Nowadays using DC112 (weld flush ground) leads to a final tower that is more expensive than if the tower is designed with DC90 on the circumferential welds.

### DESCRIPTION OF THE INVENTION

The present invention relates to an automatic apparatus for weld seams machining in wind turbine towers. Specifically the apparatus is designed to perform the welding of the circumferential seams of the tower according to a DC112 standard or superior.

As described above, following the tendency of improving the fatigue resistance of the tower structures, the next step on the improvement fatigue resistance of a circular seam is to grade-up them from DC80 or DC90 to DC112 (as per EN1993-1-9) or superior.

This is implies very exigent manufacturing technics, and in fact, it implies a lot of work on each weld seam. To avoid this extra time and work for achieving DC112 or superior an automation of this works with a minimum extra cost is disclosed.

The automatic apparatus designed is capable of identifying the welds and machine them to achieve the adequate geometrical characteristics of DC112 or superior.

The apparatus comprises at least an automated arm and a machining tool fixed to the automated arm. Also, the apparatus comprises a compensator system fixed to the machining tool or being part of the automated arm, a joint visor that identifies and locates the weld and controls the apparatus, and a control unit to coordinate the movement of the machining tool with the compensator system and the joint visor.

With this apparatus and the adequate programming, implemented on a tower manufacturing facility, the circumferential welds of the tower sections can be adequately and efficiently machined and therefore be upgraded from DC80 or DC90 to DC112 or superior. This is a very significant fatigue improvement that would allow optimizing the tower structure by reducing the amount of tower steel and its weight.

By using this automated weld flush ground process, manufacturing costs associated to the DC112 are optimized and a tower can be designed with DC112 or superior reducing the global tower costs.

It is also part of the invention a method of performing a welded circular joint in a turbine tower with the apparatus previously described. The method comprises at least the steps of:
- placing the apparatus near one weld seam;
- activating the joint visor to capture images of the weld seam;
- processing the data captioned by the joint visor in the control unit;
- adapting the position of the automated arm and the machining tool according to the data of the weld seam captioned by the joint visor;
- machining the weld seam by continuously adapting the position of the machining tool with the data captioned by the joint visor, by means of the compensator system, to assure that the same pressure is made by the machining tool along the weld seam.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows the apparatus for automation for weld seams machining of adjacent shells of a wind turbine tower.
Figure 2.- Shows two apparatus for automation for weld seams machining of adjacent shells working on the machining on part of the wind turbine tower.

### PREFERRED EMBODIMENT OF THE INVENTION

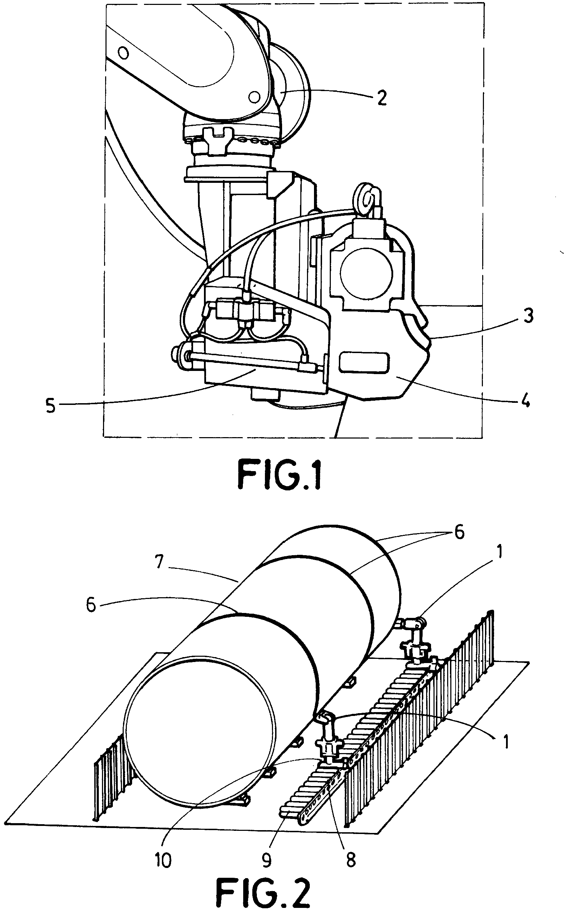

According to figures 1 and 2, an exemplary embodiment of the invention is disclosed.

An apparatus (1) for automation for weld seams (6) machining of adjacent shells of a wind turbine tower (7) is described. The apparatus comprises an automated arm (2) and a machining tool (3) joined to said automated arm (2). Furthermore, the apparatus (1) comprises a compensator system (4) and a joint visor (5) which are essential in order to solve the technical problems of the state of the art and guarantee that the machining tool (3) exerts the same pressure during the whole machining operation. The joint visor (5) identifies and locates the weld seam (6) to be machined detecting the exact location, measure and form of said weld seam (6).

The compensator system (4) is fixed to the machining tool (3) or is part of the automated arm (2). The joint visor identifies and locates the weld seam and the joint to be welded. The elements of the apparatus (1) (the automated arm (2), the machining tool (3), the compensator system (4) and the joint visor (5)) are controlled together via a control unit which is part of the apparatus (1) and that is configured to coordinate the movements of the machining tool (3), connected to the compensator system (4) and to the articulated arm (2), with the data received from the joint visor (5).

The control unit coordinates the movement of the machining tool (3) with the compensator system (4) and the joint visor (5) such that the joint visor (5) detects the exact location, measure and form of the weld seam (6) and the compensator system (4) displaces the machining tool (3) to said exact location of the weld seam (6) and adapts the position of the machining tool (3) to the measure and form of the weld seam (6).

More specifically, the control unit is configured to coordinate the movement of the machining tool (3) with the compensator system (4) and the joint visor (5) such that the joint visor (5) detects the exact location, measure and form of the weld seam (6) and the compensator system (4) displaces the machining tool (3) to said exact location of the weld seam (6) and adapts the position of the machining tool (3) to the measure and form of the weld seam (6).

The machining tool (3) joined to the automated arm (2) is, in an embodiment of the invention, a grinding wheel or an abrasive wheel. In another embodiment the machining tool (3) can be any steel removal tool.

The compensator system (4) preferably comprises a processor that receives information from the control unit, according to the data obtained by the joint visor (5) (which can be part of an artificial visor system). The processor, based on said data, displaces the machining tool (3) so as to exert the same pressure, during the machining operation, along the weld seam (6), according to the geometry of said weld seam (6).

The weld bear is not a perfect circle. This is due to the forces of gravity and typical manufacturing imperfections such as misalignments or small buns. Those imperfections make the cord at the time of being machined to have different measures and positions which vary from a perfect circle. The compensating system (4) ensures that the machining tool (3) always exerts the same machining force even though the welding bead is irregular.

The machining tool (3) has to provide always the same pressure as otherwise, it is possible to machine over or under the required pressure conditions, thus affecting the quality and validity of the welding process. In the cases in which the machining tool (3) provides a pressure under the one required in the process, it can leave a not valid weld seam (6) thickness. In this case the section of the welded section would not be accepted and would have to be redone. If it the machining tool (3) provides a pressure over the one required in the process, the fatigue strength would be too low.

The compensator system (4) allows adapting the pressure of the machining tool (3) to the required pressure according to the data received from the joint visor (5). Thus, the compensator system (4) is essential in the apparatus (1) of the present invention, allowing to recognize the geometry of the weld seam (6) and to compensate the pressure.

The joint visor (5) is another essential element of the apparatus (1) of the present invention. This element is in charge of recognizing the geometry of the weld seam cord and then sending this information to the control unit so the control unit sends the correct orders to the compensator system (4) in order to correctly position the machining tool (3). The combination of the joint visor (5) and the compensator system (4) assures that the optimum machining is achieved, both in time and in quality.

In another embodiment of the invention, the apparatus (1) further comprises rails (8) configured to be installed in a surface (9) disposed parallel to the longitudinal direction of a wind turbine tower (7) the circumferential weld seam (6) of which is to be machined. In this embodiment, the automated arm (2) comprises first guides (10) in order to displace on the rails (8).

In another embodiment, the apparatus (1) comprises wheels configured to allow the displacement of the automated arm (2) with respect to the shells and the weld seams (6) to be machined.

In a further embodiment, the apparatus comprises a GPS system connected to the control unit to determine the position of the automated arm (2) and displace the automated arm (2) along the longitudinal direction of the tower (7) and the weld seams (6) to be machined.

Since the DC requirements include welds on the two sides of the joint, in this case, the joint between two shells of the wind turbine tower has to be made on the exterior side and also on the interior of the tower (7). To allow the machining of the welding in the interior, the apparatus (1) can comprise a beam configured to be introduced through the interior of adjacent shells. In this embodiment, the automated arm (2) comprises second guides in order to displace on the beam. Preferably, the beam comprises a plurality of pieces, joined between them and which are made of a rigid material in order to outstand the weight of the apparatus (2) or at least the weight of the automated arm (2), the machining tool (3), the compensator system (4) and the joint visor (5).

The beam is a guiding rack system to allow the displacement of the arm thorough the interior of the wind turbine tower (7). The beam has to be rigid enough to support the weight of the automated arm (2) so said automated arm (2) works without excessive vibrations. Also, the beam has to be configured as simple as possible to facilitate its assembly. The assembly inside the section is preferably made in two or more parts. Preferably those parts are introduced by means of a bridge crane in the interior of the section of the wind turbine tower (7). The parts may be screwed.

Preferably, the apparatus (1) to be used in the interior of the section of the tower (7) is smaller than the apparatus to be used for machining the exterior of the tower (7). Specifically, the automated arm (2) is smaller in this first case because it has to fit in the interior of the section (7) which can have a diameter from 4m to 6m.

It is also a part of the invention a method of performing a weld circumferential seam (6) machining in a wind turbine tower (7) with the apparatus (1) previously described.

The method comprises the following steps:
- placing the apparatus (1) near one weld seam (6);
- activating the joint visor (5) to capture images of the weld seam (6);
- processing the data captioned by the joint visor (5) in the control unit;
- adapting the position of the automated arm (2) and the machining tool (3) according to the data of the weld seam (6) captioned by the joint visor (5);
- machining the weld seam (6) by continuously adapting the position of the machining tool (3) with the data captioned by the joint visor (5), by means of the compensator system (4), to assure that the same pressure is made by the machining tool (3) along the weld seam (6).

Prior to the machining of the weld seams (6) with the apparatus (1) of the invention, the shells forming the wind turbine tower (7) are placed adjacent to each other and the joints among them are formed. Preferably all the joints forming the wind turbine tower (7) are welded before the operations of machining star.

## Claims

1. Apparatus for automation of weld seams machining of adjacent shells of a wind turbine tower (7) **characterized in that** it comprises at least the following components:
- an automated arm (2);
- machining tool (3) joined to the automated arm (2);
- a compensator system (4) fixed to the machining tool (3) or being part of the automated arm (2);
- a joint visor (5) that identifies and locates the weld seam (6) to be machined detecting the exact location, measure and form;
- a control unit to coordinate the movement of the machining tool (3) with the compensator system (4) and the joint visor (5) such that the joint visor (5) detects the exact location, measure and form of the weld seam (6) and the compensator system (4) displaces the machining tool (3) to said exact location of the weld seam (6) and adapts the position of the machining tool (3) to the measure and form of the weld seam (6).

2. Apparatus for automation of weld seams machining according to claim 1 **characterized in that** it further comprises rails (8) configured to be installed in a surface (9) disposed parallel to the longitudinal direction of a wind turbine tower (7) the circumferential weld seam (6) of which is to be machined; and the automated arm (2) comprises first guides (10) in order to displace on the rails (8).

3. Apparatus for automation of weld seams machining according to claim 1 **characterized in that** it further comprises wheels configured to allow the displacement of the automated arm (2) with respect to the shells and the weld seams (6) to be machined.

4. Apparatus for automation of weld seams machining according to any of the previous claims **characterized in that** it further comprises a GPS system connected to the control unit to determine the position of the automated arm (2) and displace the automated arm (2) along the longitudinal direction of the tower (7) and the weld seams (6) to be machined.

5. Apparatus for automation of weld seams machining according to any of previous claims **characterized in that** it further comprises:
- a beam configured to be introduced through the interior of the wind turbine tower (7);
- the automated arm (2) comprises second guides in order to displace on the beam.

6. Apparatus for automation of weld seams machining according to claim 5 **characterized in that** the beam comprises a plurality of pieces, joined among them them and which are made of a rigid material in order to outstand at least the weight of the automated arm (2), the machining tool (3), the compensator system (4) and the joint visor (5).

7. Apparatus for automation of weld seam machining according to claim 1 **characterized in that** the machining tool (3) fixed to the automated arm (2) is a grinding wheel or an abrasive wheel.

8. Apparatus for automation of weld seam machining according to claim 1 **characterized in that** the compensator system (4) comprises a processor that receives information from the control unit, according to data obtained by the joint visor (5), and displaces the machining tool (3) so as to exert the same pressure, during the machining operation, along the weld seam (6), according to the geometry of the weld seam (6).

9. Method of performing a welded circular seam machining in a wind turbine tower with the apparatus of claims 1 to 8, **characterized in that** it comprises the following steps:
- placing the apparatus (1) near one weld seam (6);
- activating the joint visor (5) to capture images of the weld seam (6);
- processing the data captioned by the joint visor (5) in the control unit;
- adapting the position of the automated arm (2) and the machining tool (3) according to the data of the weld seam (6) captioned by the joint visor (5);
- machining the weld seam (6) by continuously adapting the position of the machining tool (3) with the data captioned by the joint visor (5), by means of the compensator system (4), to assure that the same pressure is made by the machining tool (3) along the weld seam (6).
